# EUROPEAN PATENT SPECIFICATION

(11) **EP 2 413 135 B1**
(45) Date of publication and mention of the grant of the patent: **22.01.2020**
(21) Application number: 11175368.7
(22) Date of filing: 26.07.2011
(51) Int. Cl.: G01N 30/86

(54) **Method and apparatus for displaying a chromatogram**
Verfahren und Vorrichtung zur Anzeige eines Chromatogramms
Procédé et appareil d'affichage de chromatogramme

(30) Priority: 26.07.2010 JP 2010167376
(43) Date of publication of application: 01.02.2012
(73) Proprietor: ARKRAY, Inc., Minami-ku Kyoto-shi Kyoto 601-8045 (JP)
(72) Inventor: Yoshida, Suguru, Kyoto-shi, Kyoto 602-0008 (JP); Nomura, Yoshihiro, Kyoto-shi, Kyoto 602-0008 (JP); Sakai, Toshikatsu, Kyoto-shi, Kyoto 602-0008 (JP); Takagi, Takeshi, Kyoto-shi, Kyoto 602-0008 (JP)
(74) Representative: Dehns

(56) References cited:
- EP-A1- 1 103 812
- JP-A- 6 034 617
- JP-A- 2004 053 283
- US-B1- 6 704 445

## Description

### FIELD OF THE INVENTION

The present invention relates to a technique of displaying chromatogram.

### BACKGROUND OF THE INVENTION

As known well, HPLC (High performance liquid chromatography) apparatuses to measure hemoglobin A1c (which will hereinafter be termed "HbAlc") are used for diagnosing diabetes and so on. Important fraction of the HPLC apparatuses to measure HbAlc level is, as a matter of course, HbAlc fraction. Therefore, the HPLC apparatus is configured to determine the display gain of the chromatogram so that the peak height of HbAlc becomes an appropriate height. However, when HbAlc (a blood sample) is measured by the HPLC apparatus, hemoglobin A0 (which will herein after be termed "HbA0") elutes in the latter half. The peak of HbA0 is about 100 times as high as that of HbAlc. Therefore, when the display gain determined based on the peak height of HbAlc is used as a display gain of a region where HbAlc elutes, the whole peak of HbAlc cannot be displayed.

In the meantime, in cases where a sample contains one or more variant hemoglobins (which will hereinafter be termed "variant Hb' s") such as hemoglobin S, hemoglobin C, hemoglobin E and so on, one or more peaks of variant Hb's elute before and after the peak of HbA0. Since variant Hb yields the measurement result of HbAlc a negative error, the presence or absence of variant Hb and variant Hb level are important factors for measuring HbAlc. Therefore, it is desirable that the whole peak of variant Hb can be displayed in the chromatogram.

Such being the case, developed is the technology (refer to, e.g., patent document 1) that switches whether or not to display a chromatogram by changing display gain at a position on the time axis between the HbA0 region where HbA0 is display and the HbAlc region where HbAlc is displayed on the basis of whether or not a peak of variant Hb exists before and after the peak of HbA0. That is, developed is the technology that maintains the display gain determined from the peak height of HbAlc when the measurement result is the one that does not require the change of the display gain, but changes the display gain at the intermediate position on the time axis when the measurement result is the one that requires the change of the display gain.

It is also known from JP-A-6034617 and JP-A-2004-053283 to colour-code or pattern a peak, either to graphically display the magnitude of the peak area based on a colour scale or to identify a particular peak.

### <RELATED ART PUBLICATION>

Patent document 1: Japanese Laid-Open Patent Publication No. 10-90242
Patent document 2: Japanese Laid-Open Patent Publication No. 10-300741

However, there are cases where the peak of the most important measurement target component among the peaks of measurement target components (variant Hb, HbA0) displayed in the HbA0 region is hard to recognize. Moreover, the visual balance of the chromatogram is bad as the case maybe. Specifically, for instance, if hemoglobin S among variant Hb's is to be recognized more preferentially than HbA0, it is desirable that the HbA0 region is displayed on basis of the peak of hemoglobin S. Moreover, for instance, if displaying of the HbA0 region on the basis of the hemoglobin C peak deteriorates the visual balance of the chromatogram, it is desirable that the peak of hemoglobin C in the HbA0 region is displayed as a peak accompanying the peak of HbA0. Thus, it is desirable that the display gain of the HbA0 region is changed, by considering importance of each component, the visual balance of the chromatogram, etc., so that a peak of a component to be displayed more preferentially is displayed in a way where the peak of the component can be recognized more easily. Furthermore, there are some cases where required is the chromatogram where a peak of a measurement target component having higher priority level is displayed in a more distinguishable form/size.

### SUMMARY OF THE INVENTION

The present invention, conceived to address the above-mentioned problems, has an objective to provide a technology that displays a peak of a measurement target component required to be displayed more preferentially in a way where the peak of the component can be recognized more easily.

According to an aspect of the invention, there is provided a method for displaying a chromatogram, wherein the chromatogram comprises a time axis and an axis corresponding to the detection output, wherein a plurality of measurement target components appear as a plurality of peaks in the chromatogram, the method comprising: a step of determining a display form of the chromatogram, including reading priority information indicating priority levels of the measurement target components and determining a highest priority measurement target component having the highest priority level, and determining the display form based on the priority levels of the measurement target components; and a step of displaying the chromatogram in the determined display form, characterized in that the step of determining the display form includes: determining a peak area of the highest priority measurement target component; determining a sum of peak areas, wherein the sum of peak areas is either a sum of the peak areas of all measurement target components or a sum of peak areas of specific measurement target components; determining a component ratio, wherein the component ratio is the ratio of the peak area of the highest priority measurement target component to the sum of peak areas; and determining the display gain so that a ratio of the height of the peak of the highest priority measurement target component to the length of the output axis of the chromatogram is equal to the component ratio, whereby the height of the peak of the highest priority measurement target component corresponds to the component ratio, whereby the peak of the highest priority measurement target component is displayed more preferentially.

According to this aspect of the invention, the display gain of the chromatogram is determined based on the priority levels of the measurement target components whose peaks are to be displayed so that a peak of a measurement target component having higher priority level among the measurement target components whose peaks are to be displayed is displayed more preferentially. This feature enables, for example, an operator to recognize the peak size and so on of the important measurement target component at a glance . Here, the operator is defined as the person who concludes the analysis result from the shape etc. of the chromatogram. Moreover, it is possible to display all portions of the peak of the measurement target component required to be displayed more preferentially. It should be noted that though the present method is the one that can be used for displaying a chromatogram of a sample (material including a plurality of measurement target components) for the first time, the present method is not the one that can be used only for displaying a chromatogram for the first time. For instance, after deciding priority level of each measurement target sample on the basis of the display result of the chromatogram, the chromatogram where a peak of a more important measurement target component is displayed more preferentially can be obtained by using this method.

Incidentally, in the present invention, "measurement target component" means a component whose peak is appear in a chromatogram. That is, "measurement target component" involves not only a component which the user intends to measure, but also a component which the user does not intend to measure, but a peak of which is appear in a chromatogram. Moreover, various steps, specific content of which are different mutually, can be adopted as "a step of determining, based on priority levels of measurement target components whose peaks are to be displayed in a chromatogram, a display form of the chromatogram so that a peak of a measurement target component having higher priority level among said measurement target components is displayed more preferentially" (which will hereinafter be termed the determining step).

It is also possible to adopt a step of determining a display form of the chromatogram so that raw data (time, area, area rate) of each measurement target component having higher priority level are displayed near the peak of each measurement target component having higher priority level. It is also possible to adopt a step of determining a display form of the chromatogram so that a symbol (display level itself, etc.) indicating that it is important component is displayed near the peak of each measurement target component having higher priority level as the determining step. Moreover, it is possible to adopt, as the determining step, a step of determining a display form of the chromatogram so that a peak of each measurement target component having higher priority level is displayed in the color (or shade on the gray scale) corresponding to the composition ratio of the measurement target component. Furthermore, it is possible to adopt, as the determining step, a step of determining a display form of the chromatogram so that a peak of each measurement target component is displayed in a color (or shade on the gray scale) corresponding to its priority level.

Here, each method for displaying chromatogram according to the present invention is performed by, e.g., a microprocessor. Moreover, in the present invention, "display a chromatogram" means to show or exhibit a chromatogram on a display screen of CRT, etc. or a recording chart.

Preferably, the chromatogram is displayed as a combination of a plurality of regions including a certain region in which the peaks of the measurement target components, including the peak of the measurement target component having the higher priority level, are to be displayed,
wherein in the step of determining the display gain, the display gain of the certain region is determined based on the priority levels of the measurement target components whose peaks are to be displayed in the certain region, so that the peak of the measurement target component with higher priority level among said measurement target components whose peaks are to be displayed in the certain region is displayed more preferentially; and
wherein in the step of displaying the chromatogram, the certain region is displayed in the determined display gain and other regions of the plurality of regions of the chromatogram are displayed, concurrently.

According to this embodiment, a display gain of a certain region is determined so that a peak of a measurement target component with higher priority level among the measurement target components whose peaks are to be displayed in the certain region. This feature enables, for example, the operator to recognize the peak size and so on of the important measurement target component at a glance. Moreover, it is possible to display all portions of the peak of the measurement target component required to be displayed more preferentially.

Here, a certain region means a region where one or more peaks (fractions) are displayed. In other words, a certain region means a region that can be obtained by dividing a chromatogram by one or more lines perpendicular to the time axis. Examples of a certain region are a HbAlc region, a HbA0 region, etc. Here, the HbAlc region is defined as the first half of two regions obtained by dividing a chromatogram by a line perpendicular to the time axis between HbAlc and HbA0, and the HbA0 region is defined as the latter half of the two regions. In other words, the HbAlc region is the region where HbAlc is displayed, and the HbA0 region is the region where HbAlc is displayed and variant Hb may be displayed.

Preferably, the peaks of the measurement target components are to be displayed in a region of a chromatogram;
wherein the step of determining the display gain of the chromatogram comprises determining, based on the priority levels of the measurement target components whose peaks are to be displayed in the region of the chromatogram, the display gain of the region, so that the peak of the measurement target component having higher priority level among said measurement target components whose peaks are to be displayed in a region of the chromatogram is displayed more preferentially; and
wherein the step of displaying the chromatogram in the determined display gain comprises displaying the chromatogram including the region in the determined display gain.

Note that, as the step of determining of above two embodiments of the invention, adopted is a step of determining the display gain so that a peak height of a measurement target component having a higher priority level among said measurement target components indicates a component ratio of the measurement target component to all measurement target components or specific measurement target components.

Consequently, the operator can recognize the component ratio of the important measurement target component at a glance.

According to still another embodiment, a method for displaying chromatogram as a combination of a HbAlc region where HbAlc elutes and a HbA0 region where HbA0 and one or more variant Hb' s elute includes:
a step of determining, based on priority levels of HbA0 and one or more variant Hb's, a display gain of the HbA0 region so that a peak of a component with higher priority level among HbA0 and one or more variant Hb' s whose peaks are to be displayed in the HbA0 region is displayed more preferentially; and
a step of displaying the HbA0 region in the determined display gain and the HbAlc region, concurrently.

According to this embodiment, a display gain of the HbA0 region of a chromatogram is determined so that a peak of a component with higher priority level among HbA0 and one or more variant Hb's whose peaks are to be displayed in the HbA0 region is displayed more preferentially. This feature enables, for example, the operator to recognize the peak size and so on of the important measurement target component in the HbA0 region at a glance. Moreover, it is possible to display all portions of the peak of the measurement target component required to be displayed more preferentially.

As the step of determining of this aspect of the invention, it is possible adopt a step of determining a display gain so that a peak height of a component having the highest priority level among HbA0 and one or more variant Hb's whose peaks are to be displayed in the HbA0 region indicates a component ratio of the component to all hemoglobins or specific hemoglobins.

According to the method with this step of determining, it is feasible to display the chromatogram indicating the component ratio of the measurement target component having the highest priority level among HbA0 and one or more variant Hb's. Consequently, the operator can recognize the component ratio of the important measurement target component at a glance.

According to a second aspect of the present invention, there is provided an apparatus for displaying a chromatogram, wherein the chromatogram comprises a time axis and an axis corresponding to the detection output, wherein a plurality of measurement target components appear as a plurality of peaks in the chromatogram, the apparatus comprising: a unit to determine a display form of the chromatogram, wherein the unit is configured to: readpriority information indicating priority levels of the measurement target components; determine a highest priority measurement target component having the highest priority level; and determine the display form based on the priority levels of the measurement target components; and a unit to display the chromatogram in the determined display form, characterized in that the unit to determine the display form is configured to: determine a peak area of the highest priority measurement target component; determine a sum of peak areas, wherein the sum of peak areas is either a sum of the peak areas of *all* measurement target components or a sum of peak areas of *specific* measurement target components; determine a component ratio, wherein the component ratio is the ratio of the peak area of the highest priority measurement target component to the sum of peak areas; and determine the display gain so that a ratio of the height of the peak of the highest priority measurement target component to the length of the output axis of the chromatogram is equal to the component ratio, whereby the height of the peak of the highest priority measurement target component corresponds to the component ratio, whereby the peak of the highest priority measurement target component is displayed more preferentially.

Note that, as "a unit to display the chromatogram in the determined display form, " it is possible to adopt "a unit to print the chromatogram in the determined display gain, " "a unit to exhibit on a display screen the chromatogram in the determined display gain," etc. Moreover, the apparatus for displaying chromatogram of the present invention may be configured as a HPLC (high performance liquid chromatography) apparatus.

Preferably, the chromatogram is displayed as a combination of a plurality of regions including a certain region in which the peaks of the measurement target components, including the peak of the measurement target component having the higher priority level, are to be displayed,
wherein the unit to determine the display gain determines the display gain of the certain region in which peaks of measurement target components are to be displayed, based on the priority levels of the measurement target components whose peaks are to be displayed in the certain region, so that the peak of the measurement target component with higher priority level among said measurement target components whose peaks are to be displayed in the certain region is displayed more preferentially,
and wherein the unit to display the chromatogram is configured to display the certain region in the determined display gain and other regions of the plurality of regions of the chromatogram, concurrently.

Preferably, the apparatus is configured to display the chromatogram as a combination of a HbAlc region where HbAlc elutes and a HbA0 region where HbA0 and one or more variant Hb's elute;
wherein the unit to determine the display gain is configured to determine, based on priority levels of HbA0 and one or more variant Hb's, a display gain of the HbA0 region so that a peak of a component with higher priority level among HbA0 and one or more variant Hb's whose peaks are to be displayed in the HbA0 region is displayed more preferentially; and
wherein the unit to display the chromatogram is configured to display the HbA0 region in the determined display gain and the HbAlc region, concurrently.

As the unit to determine the display gain of this apparatus, it is possible to use a unit that determines the display gain so that a peak height of a component having the highest priority level among HbA0 and one or more variant Hb's whose peaks are to be displayed in the HbA0 region indicates a component ratio of the component to all hemoglobins or specific hemoglobins.

According to still another embodiment, a program for making a computer display a chromatogram makes a computer execute any of the foregoing methods.

According to still another aspect of the present invention, a computer-readable recording medium is stored with a program of the present invention.

Incidentally, the computer-readable recording mediums can be can be exemplified by a ROM, a RAM, a magnetic disk, a magneto optical disk, a CD-ROM, a flash memory.

Preferred embodiments of the present invention will now be described by way of example only and with reference to the following drawings, in which:
FIG. 1 is a diagram showing an outline of an architecture of an HPLC apparatus according to the first embodiment of the present invention;
FIG. 2 is a diagram showing displaying of chromatogram according to the first embodiment;
FIG. 3 is a diagram showing a status where display gain of HbA0 region is determined by converting an area ratio of hemoglobin S into a rate of a peak height of hemoglobin S in HbA0 region;
FIG. 4 is a diagram showing an example of chromatogram displayed by the HPLC apparatus according to the first embodiment;
FIG. 5 is a flowchart showing a chromatogram drawing data generation routine 1 according to the first embodiment;
FIG. 6 is a flowchart showing a chromatogram drawing data generation routine 2 according to a modified example of the first embodiment;
FIG. 7 is a diagram showing an outline of architecture of an HPLC apparatus according to the second embodiment of the present invention;
FIG. 8 is an explanatory diagram showing an example of a measurement result screen displayed by the HPLC apparatus according to the second embodiment;
FIG. 9 is an explanatory diagram showing another example of the measurement result screen displayed by the HPLC apparatus according to the second embodiment;
FIG. 10 is an explanatory diagram showing an example of a priority level setting screen displayed by the HPLC apparatus according to the second embodiment;
FIG. 11 is an explanatory diagram showing an example of how measurement result screen changes by changing priority levels;
FIG. 12 is an explanatory diagram showing an example of the measurement result screen where chromatograms before and after the change of the priority levels are displayed;
FIG. 13 is an explanatory diagram showing a printed result by the HPLC apparatus according to the second embodiment;
FIG. 14 is an explanatory diagram showing a printed result by the HPLC apparatus according to the second embodiment; and
FIG. 15 is an explanatory diagram showing a printed result by the HPLC apparatus according to the second embodiment.

### DESCRIPTION OF EMBODIMENT

Hereinafter, embodiments of the present invention will be described.

### <FIRST EMBODIMENT>

### (HPLC APPARATUS)

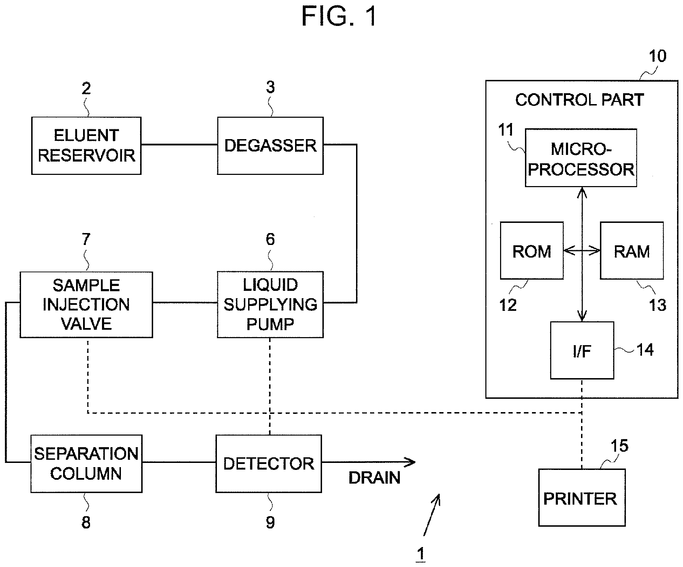

FIG. 1 is a diagram showing an outline of architecture of an HPLC apparatus (High Performance Liquid Chromatography apparatus) according to the first embodiment of the present invention. The HPLC apparatus corresponds to the display apparatus for the chromatogram of the present invention. The HPLC apparatus 1 shown in FIG. 1 is an apparatus that measures HbAlc used to diagnose the diabetic, etc. The HPLC apparatus 1 is provided with an eluent reservoir 2, a degasser 3, a liquid supplying pump 6, a sample injection valve 7, a separation column 8, a detector 9, a control part 10, and a printer 15.

The eluent reservoir 2 reserves eluent that is the mobile phase used to perform a separation. The degasser 3 removes the mixed gases (air, etc) from the eluent. The liquid supplying pump 6 is controlled by control part 10 so as to transport the eluent. The sample injection valve 7 is controlled by control part 10 so as to inject a blood sample into the eluent. The separation column 8 separates the blood sample. The separation column 8 is placed in a thermostat chamber (not shown in the figure) that is controlled by control part 10. The detector 9 is an absorbance detector. The detector 9 detects various hemoglobins in the blood sample separated by separation column 8 and sends the detection output to the control part 10.

The control part 10 is provided with a microprocessor 11, a ROM 12, a RAM 13, and an input-output interface ("I/F" in the figure) 14. The control part 10 controls the HPLC apparatus 1 totally. The printer 15 records a chromatogram on a recording chart on the basis of drawing data from the control part 10. The printer 15 corresponds to the display output part. Note that a CRT is available instead of the printer 15. Microprocessor 11, by executing the program stored in the ROM 12, controls the liquid supplying pump 6, the sample injection valve 7, etc. , generates the drawing data of the chromatogram on the basis of the detection output from the detector 9, and outputs the drawing data to the printer 15. The ROM 12 is stored with data for identifying various hemoglobins, the program that the microprocessor 11 executes, etc. The RAM 13 is used for storing the detection output from detector 9, etc. The input-output interface 14 makes serial-parallel conversion and analog-to-digital conversion of the input-output data.

In this HPLC apparatus 1, the eluent is transported from the eluent reservoir 2 to the degasser 3 by the pump 6, and the eluent degassed by the degasser 3 flows into the sample injection valve 7. The blood sample is injected into the eluent by this sample injection valve 7, various hemoglobins in the blood sample are separated by separation column 8, the various hemoglobins are detected by the detector 9, and the detection output is sent to the control part 10. The detection output is converted into the digital data and stored in the RAM 13. Then, the microprocessor 11 generates the drawing data of the chromatogram based on the data stored in RAM 13 and outputs the generated drawing data to the printer 15, thereby the generated drawing data is displayed (printed) on the recording chart.

More specifically, multiple pieces of digital data each corresponding to the detection output of the detector 9 at each time (multiple pieces of time series digital data) is stored in the RAM 13. The processor 11 calculates, based on the multiple pieces of digital data in the RAM 13, integration value of the detection output of the detector 9 in each period that one measurement target component elutes. Namely, the processor 11 calculates, with respect to each of measurement target components, a relative amount (which will hereinafter be termed a peak area or an area) of the measurement target component. Note that, when calculating peak areas, if a peak area calculated about a certain measurement target component is smaller than a threshold predetermined for the component (or a common threshold for all measurement target components), the peak area is able to be treated as "0. " In other words, it is possible to consider that the certain measurement target component is not detected.

Thereafter, the processor 11 generates, based on the peak areas of the detected measurement target components, drawing data of a chromatogram according to the following procedures, and feeds the generated drawing data to the printer 15.

### (CHROMATOGRAM)

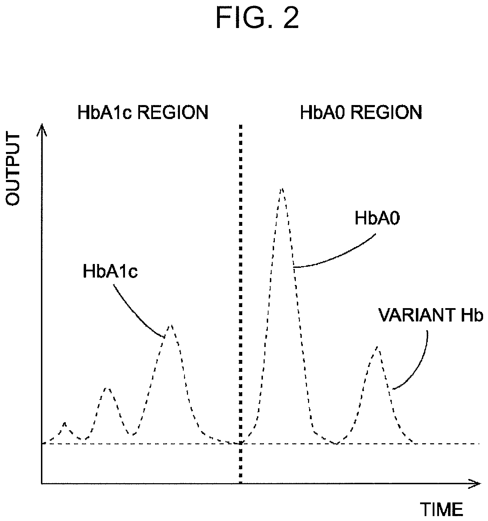

As shown in FIG. 2, the HPLC apparatus 1 is an apparatus that displays a chromatogram which is divided, by a line between HbAlc and HbA0 peaks (on the way of the time axis), into a HbAlc region where a HbAlc peak elutes and a HbA0 region where a HbA0 peak and variant Hb peaks elute by determining display gains of HbAlc and HbA0 regions separately.

The HPLC apparatus 1 according to this embodiment is characterized by how to determine the display gain of the HbA0 region. The HPLC apparatus 1 according to this embodiment is configured so as to display chromatograms in a form that enables the operator to recognize easily in order of hemoglobin S, HbA0, and hemoglobin C. Specifically, in the HPLC apparatus 1, priority information, indicating that the first priority, the second priority and the third priority are given to hemoglobin S, HbA0 and hemoglobin C, respectively, is set (stored) in advance. The HPLC apparatus 1, based on the priority information, specifies one component having the highest priority from the detected components among hemoglobin S, HbA0 and hemoglobin C, and determines the display gain of the HbA0 region based on the peak of the specified component.

Note that the HPLC apparatus 1 can be modified into, e.g., an apparatus that is used in a way where the operator sets the priority information according to the purpose of each measurement.

Moreover, priority order of measurement target components can properly decide according to the situation. For instance, priority order of measurement target components can harmonize with significance order, but it is not necessary the priority order of measurement target components harmonize with significance order.

In this embodiment, when the peak of hemoglobin S is detected from the blood sample, the display gain of the HbA0 region is determined based on the peak of hemoglobin S. When the peak of hemoglobin S is not detected and the peak of HbA0 is detected, the display gain of the HbA0 region is determined based on the peak of HbA0. When neither the peak of hemoglobin S nor the peak of HBA0 is detected and the peak of hemoglobin C is detected, the display gain of the HbA0 region is determined based on the peak of hemoglobin C. This procedure makes it possible to determine the display gain so that the measurement target component having higher priority level is displayed more preferentially.

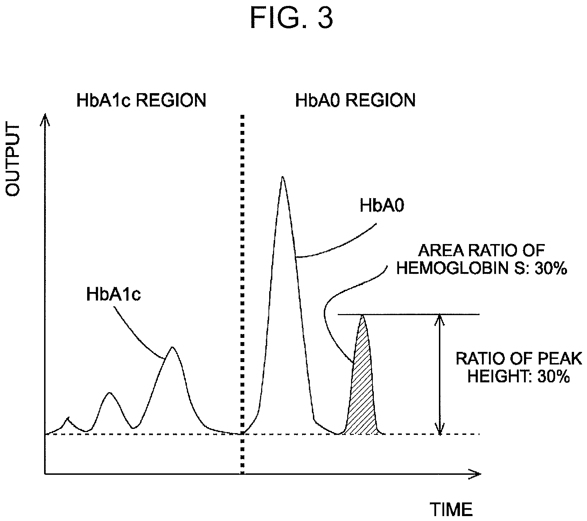

Moreover, in this embodiment, when the display gain of the HbA0 region is determined based on the peak of a component, the display gain of the HbA0 region is determined by converting "an area ratio of the peak area of the component to the sum of the peak areas of all hemoglobins (fractions)" to a ratio of the peak height of the component in the HbA0 region. For example, suppose that hemoglobin S is detected and the area ratio of the peak area of hemoglobin S to the sum of the peak areas of all hemoglobins is 30% as shown in FIG. 3. In this case, 30% is converted to (treated as) the ratio of the peak height of hemoglobin S to the length of the vertical axis of the chromatogram, and the display gain of the HbA0 region is determined. In other words, the display gain of the HbA0 region is determined so that the peak height of a specific component (a component to be displayed more preferentially) indicates the component ratio of the specific component. Note that the display gain of the HbA0 region may be determined with using the sum of the peak areas of specific hemoglobins (specific measurement target components) instead of the sum of the peak areas of all hemoglobins.

In the meantime, the display gain of the HbAlc region is determined by converting a product of a predetermined coefficient ("5" in this embodiment) and "an area ratio of the peak area of the HbAlc to the occupied area of hemoglobin A (the sum of peak areas of specific hemoglobins classified into hemoglobin A)" to a ratio of the peak height of the HbAlc in the HbAlc region. For example, if the area ratio of the peak area of the HbAlc to the occupied area of hemoglobin A is 6 %, 30% which is the product of 6% and 5 (the predetermined coefficient) is converted to the ratio of the peak height of HbAlc to the length of the vertical axis of the chromatogram, and the display gain of the HbAlc region is determined.

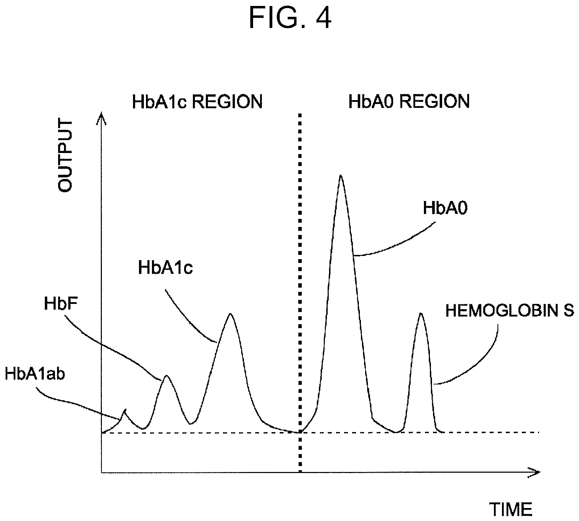

Thereafter, the drawing data is generated which causes printer 15 to display (print) concurrently the HbAlc region whose display gain matches with the determined display gain of the HbAlc region and the HbA0 region whose display gain matches with the determined display gain of the HbA0 region on the recording chart. Then, the generated drawing data is fed to the printer 15, thereby the chromatogram as shown in FIG. 4 is displayed (printed) on the recording chart. Thus, the chromatogram is created by determining the display gains of the HbAlc region and the HbA0 regions separately. The above-mentioned chromatogram display processing operation is achieved as a result that the microprocessor executes the chromatogram displaying program stored in the ROM.

### (CHROMATOGRAM DRAWING DATA GENERATION ROUTINE 1)

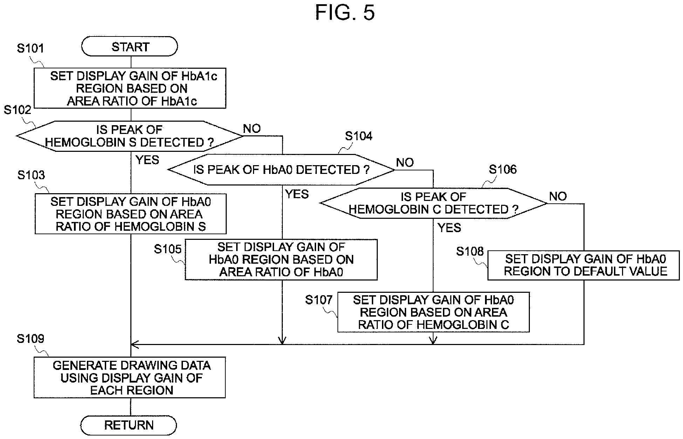

The chromatogram drawing data generation routine 1 that microprocessor 11 executes will hereinafter be described with reference to FIG. 5. FIG. 5 is a flowchart showing the chromatogram drawing data generation routine 1 according to the first embodiment. This routine is executed by the processor 11 each time a measurement (analysis) of a blood sample is done.

Note that, as already mentioned, the priority information, which indicating that the first priority, the second priority and the third priority are given to hemoglobin S, HbA0 and hemoglobin C, respectively, is stored in the ROM, etc. of the HPLC apparatus 1. This chromatogram drawing data generation routine 1 is the one that is reflected by the priority information.

When the routine shown in FIG. 5 is started, the display gain of the HbAlc region is set in S101. When the area ratio of the peak area of the HbAlc to the occupied area of hemoglobin A is 6 %, the product of 6% and 5, i.e. 30%, is converted to (treated as) the ratio of the peak height of HbAlc to the length of the vertical axis of the chromatogram, and the display gain of the HbAlc region is set (determined) so that the peak height of HbAlc becomes 30%.

In S102, it is judged whether or not the peak of hemoglobin S is detected from the blood sample. When the affirmative judgment is done (When the peak of hemoglobin S is detected) in S102, the process is shifted to S103. When the negative judgment is done (When the peak of hemoglobin S is not detected) in S102, the process is shifted to S104.

In S103, the display gain of the HbA0 region is set based on the peak of hemoglobin S. When the area ratio of the peak area of hemoglobin S to the sum of the peak areas of all hemoglobins is 30%, thisvalue (30%) is converted to a ratio of the peak height of hemoglobin S in the HbA0 region, and the display gain of the HbA0 region is set (determined) so that the peak height of Hemoglobin S becomes 30%.

In S104, it is judged whether the peak of HbA0 is detected from the blood sample. When the affirmative judgment is done (When the peak of HbA0 is detected) in S104, the process is shifted to S105. When the negative judgment is done (When the peak of HbA0 is not detected) in S104, the process is shifted to S106.

In S105, the display gain of the HbA0 region is set based on the peak of HbA0. When the area ratio of the peak area of HbA0 to the sum of the peak areas of all hemoglobins is 50%, this value (50%) is converted to a ratio of the peak height of HbA0 in the HBA0 region, and the display gain of the HbA0 region is set (determined) so that the peak height of HbA0 becomes 50%.

In S106, it is judged whether the peak of hemoglobin C is detected from the blood sample. When the affirmative judgment is done (When the peak of hemoglobin C is detected) in S106, the process is shifted to S107. When the negative judgment is done (When the peak of hemoglobin C is not detected) in S106, the process is shifted to S108.

In S107, the display gain of the HbA0 region is set based on the peak of hemoglobin C. When the area ratio of the peak area of hemoglobin C to the sum of the peak areas of all hemoglobins is 20%, this value (20%) is converted to a ratio of the peak height of hemoglobin C in the HbA0 region, and the display gain of the HbA0 region is set (determined) so that the peak height of hemoglobin C becomes 20%.

In S108, the display gain of the HbA0 region is set to the default value. That is, when none of hemoglobin S, HbA0 and hemoglobin C is detected, the default value, which is a standard display gain of the HbA0 region is used as the display gain of the HbA0 region. The default value is set (stored) into the HPLC apparatus in advance.

In S109, the drawing data is generated which causes printer 15 to display (print) concurrently the HbAlc region whose display gain matches with the determined display gain of the HbAlc region and the HbA0 region whose display gain matches with the determined display gain of the HbA0 region on the recording chart. The generated drawing data is fed to the printer 15, thereby the chromatogram as shown in FIG. 4 is displayed (printed) on the recording chart. Note that FIG. 4 shows an example of chromatogram displayed when hemoglobin S is detected.

### <MODIFIED EXAMPLE OF FIRST EMBODIMENT>

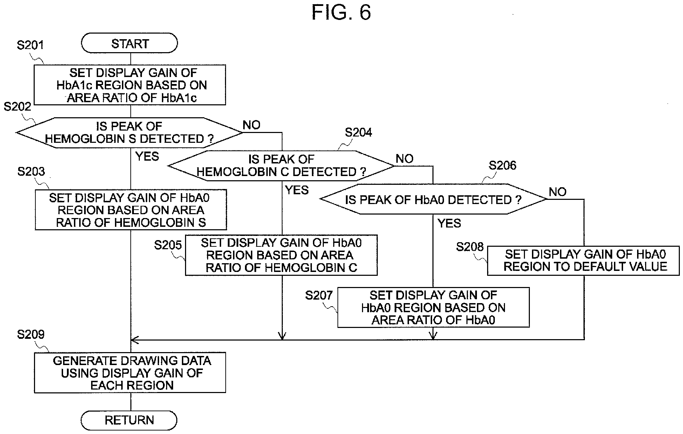

As described above, the HPLC apparatus 1 according to the first embodiment is configured so as to displays chromatograms in a form that enables the operator to recognize easily in order of hemoglobin S, HbA0, and hemoglobin C. The reasons this configuration is adopted are: hemoglobin S is usually most important component in the blood sample; and this configuration capacitates to restrict that hemoglobin C deteriorates the visual balance of the chromatogram. However, there are cases where hemoglobin C is more important than HbA0 . Accordingly, the first priority, the second priority and the third priority may be given to hemoglobin S, hemoglobin C and HbA0, respectively. FIG. 6 is a flowchart showing the chromatogram drawing data generation routine 2 according to the first embodiment. In this routine, the step of judging whether or not the peak of hemoglobin C is detected from the blood sample (S204) is executed before the step of judging whether or not the peak of hemoglobin S is detected from the blood sample (S206) . Thus, if a chromatogram drawing data generation routine for another priority order of components is required, the chromatogram drawing data generation routine can be obtained by changing the execution order of the judging steps in the chromatogram drawing data generation routine 1 or 2 according to the desired priority order of components. Moreover, the number and/or combination of components, to which the priority order is set, can also be changed.

Further, the above-mentioned HPLC apparatus 1 is the apparatus that determines the display gain of the HbA0 region using the characteristic procedure (FIG. 5, 6) . However, the HPLC apparatus 1 may be modified into the apparatus that also determines the display gain of another region (e.g., the HbAlc region) using the characteristic procedure. Specifically, in the HbAlc region, hemoglobin Alab (HbA1ab), hemoglobin F (Hbf), etc. are eluted in addition to Hb1c as shown in FIG. 4. Accordingly, by setting the priority order to these components, the display gain of HbA0 region may also be determinedusing the characteristic procedure. Similarly, the display gain of arbitrary region in which a plurality of components may elute can be determined using the characteristic procedure of the present invention. Moreover, it possible to use the characteristic procedure for determining the display gain of the whole area of the chromatogram. Further, the characteristic procedure of the present invention can be adopted to every apparatus that displays the chromatogram.

### <SECOND EMBODIMENT>

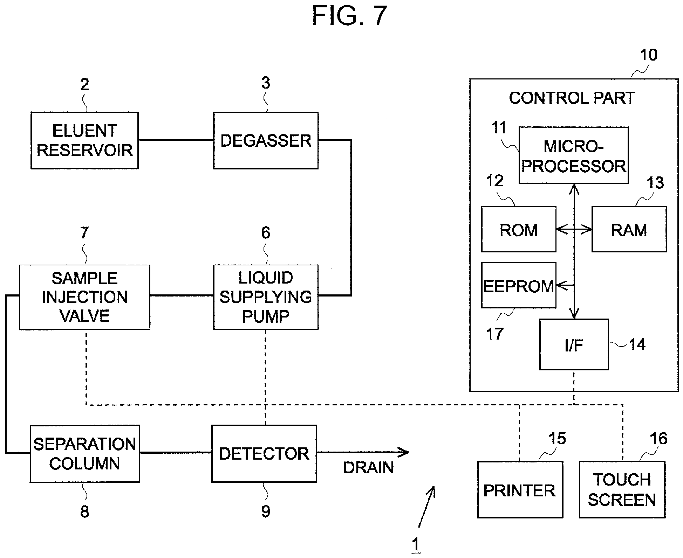

The configuration and the operation of the HPLC apparatus 1 according to the second embodiment of the present invention (which will hereinafter also be termed the second HPLC apparatus 1) will hereinafter be described with reference to FIGS 7-15 by focusing on different points of the configuration and the operation of the HPLC apparatus 1 according to the first embodiment 1 (whichwillhereinafter termed the second HPLC apparatus 1).

### <<CONFIGURATION>>

As shown in FIG. 7, the second HPLC apparatus 1 is basically an apparatus manufactured by adding a touch screen 16 to the first HPLC apparatus 1 (see FIG. 1). However, the control part 10 of the second HPLC apparatus 1 is provided with an EEPROM 17. Moreover, the ROM 12 of the second HPLC apparatus 1 is stored with a program (which will be hereinafter termed the second program), the contents of which is different from the program stored in the ROM 12 of the first HPLC apparatus 1.

### <<OPERATION>>

In short, the second HPLC apparatus 1 is the apparatus manufactured by altering the first HPLC apparatus 1 so that the number of peculiar display gain regions and the range (width) of each peculiar display gain regions can be set (changed); and the priority level of each measurement target component can be set on a per peculiar display gain region basis . Note that the peculiar display gain region is a region, the boundary position of which is defined by a piece of display gain switchingposition information (which will be explained in details later on) and the display gain of which is determined so that the peak height of the measurement target component having the highest priority shows its component ratio. In other words, the peculiar display gain region is the region that corresponds to the HbAlc region, the HbA0 region of the first embodiment.

The EEPROM 17 is a rewritable nonvolatile memory for storing n (,0) pieces of display gain switching position information set by the operator, the priority levels of various components set by the operator on a per peculiar display gain region basis, etc. The second HPLC apparatus 1 is manufactured (shipped), for instance, in a status of this EEPROM 17 being stored with display gain switching position information indicating the boundary position between the HbA0 region and the HbAlc region, priority levels of various components whose peaks appears in the HbA0 region, and priority levels of various components whose peaks appears in the HbA0 region.

When the secondHPLC apparatus 1 is activated, the microprocessor 11 (which will hereinafter simply be termed the processor 11) of the second HPLC apparatus 1 starts operation under the control of the second program. Then, the processor 11, at first, executes a process of loading each display gain switching position information in the EEPROM 17 into the RAM13 as a current display gain switching position information and loading, on a per peculiar display gain region basis, each priority level in the EEPROM17 into the RAM13 as a current priority level.

Thereafter, the processor 11 makes the touch screen 16 display a prescribed screen and enters the state to accept a measurement starting instruction, etc.

When accepting the measurement starting instruction, the processor 11, at first, controls the sample injection valve '7, etc. This control causes the detector 9 to output signal indicating components contained in the blood sample. The processor 11 calculates, based on the signal output from the detector 9, the peak area of each measurement target component by using the same procedure as the one described above.

The processor 11 having calculated the peak area of each measurement target component starts a measurement result displaying process, and, at first, specifies "n+1" peculiar display gain regions by treating each of n pieces of the current display gain switching position information in the RAM 13 as information that defines the boundary position of two peculiar display gain regions.
Next, the processor 11 performs, for each of the peculiar display gain regions, "process of determining the display gain so that the peak height of the measurement target component with the highest priority level indicates its component ratio by using, as the priority level of each measurement target component, the current priority level of each measurement target component in the RAM 12." Namely, the processor 11 performs, for each of the peculiar display gain regions, process that has the same content as the process at step S103, etc. discussed above.

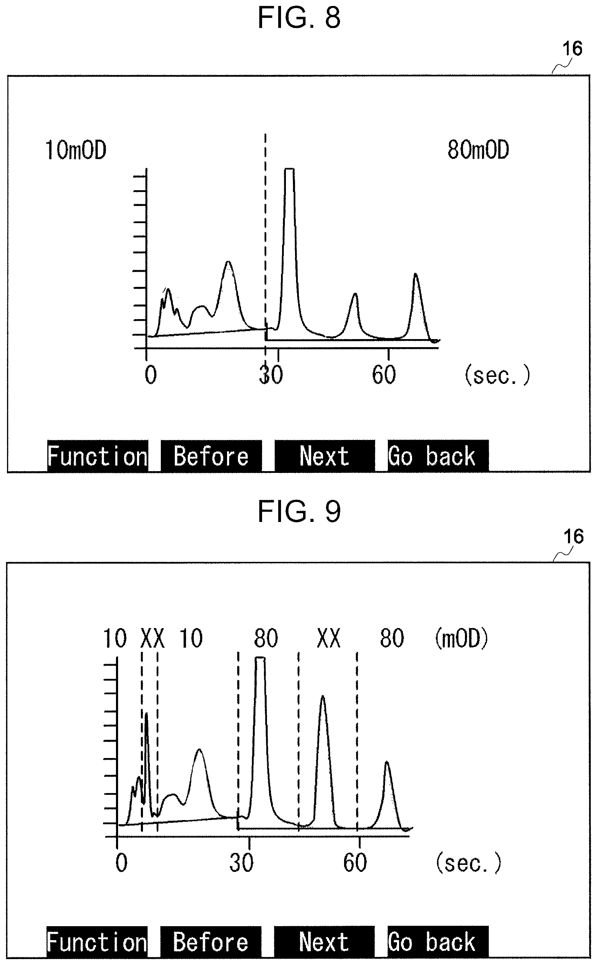

Subsequently, the processor 11 displays on the touch screen 16 the display measurement result screen including the chromatogram, the display gain of each peculiar display gain region of which is adjusted to the calculated (determined) value. Note that the display measurement result screen shown in FIG. 8 is the one that is displayed when two peculiar display gain regions are set (one piece of display gain switching position information is set) . Moreover, the display measurement result screen shown in FIG. 9 is the one that is displayed when six peculiar display gain regions are set (five pieces of display gain switching position information is set).

The processor 11 having displayed the measurement result screen enters a state to accept a priority level change instruction, a peculiar display gain region change instruction, and print instruction, etc. from the operator through the operation of the operator to the touch screen 16.

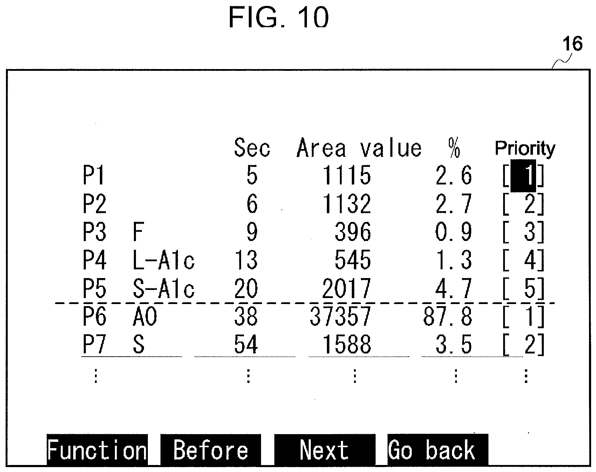

When accepting the priority level change instruction, the processor 11 displays on touch screen 16 a priority level setting screen to let the operator set a new priority level of each measurement target component. More specifically, as shown in FIG. 10, the processor 11 displays on the touch screen 16 the priority level setting screen where current priority levels of measurement target components are shown on a per peculiar display gain region basis. Note that the priority level setting screen shown in FIG. 10 is the one that is displayed when the display measurement result screen is the one shown in FIG. 8

When the operator changes priority levels concerning some peculiar display gain regions and instructs finishing of changing by operating the priority level setting screen, the processor 11, at first, stores each changed /not-changed priority level as a new priority level in the RAM 12.

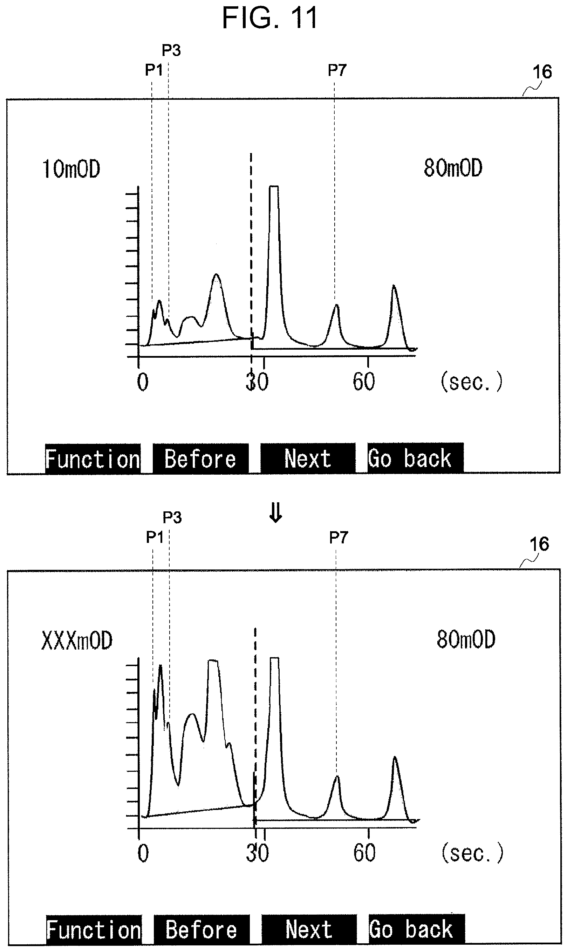

Subsequently, the processor 11 performs, for each of the peculiar display gain regions, "process of determining the display gain so that the peak height of the measurement target component with the highest priority level indicates its component ratio by using, as the priority level of each measurement target component, the new priority level of each measurement target component in the RAM 12. " Then, the processor 11 stores the determined display gains of the peculiar display gain regions in the RAM 12 in the way in which each display gain is not overwritten (in the way in which each display gain before the change of the priority levels is kept in the RAM) . Subsequently, the processor 11 displays on the touch screen 16 the display measurement result screen including the chromatogram, the display gain of each peculiar display gain region of which is adjusted to the calculated (determined) value. Consequently, when the operator changes the priority level of the peak 3 (F peak) to "1" (the highest priority level), the contents of the measurement result screen changes as shown in FIG. 11.

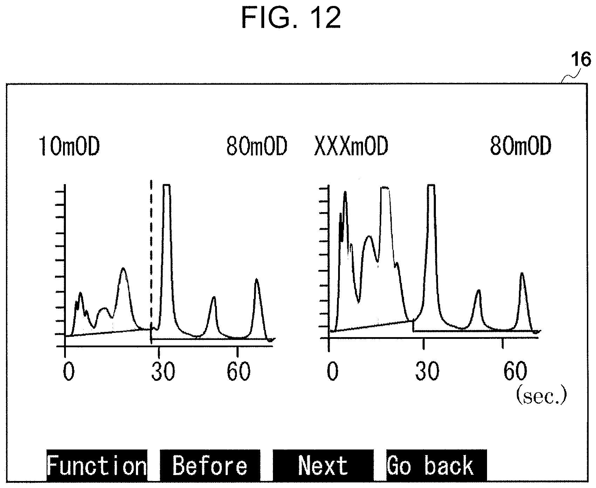

The processor 11 having re-displayed the measurement result screen enters a state to accept a parallel displaying instruction, a parallel printing instruction, a single printing instruction, a priority level re-change instruction, a priority level reflecting instruction, etc. The processor 11, when accepting the parallel displaying instruction, displays the measurement result screen as illustrated in FIG. 12. That is, the processor 11 displays the measurement result screen in which the chromatogram before changing the priority levels and the chromatogram after changing the priority levels are displayed.

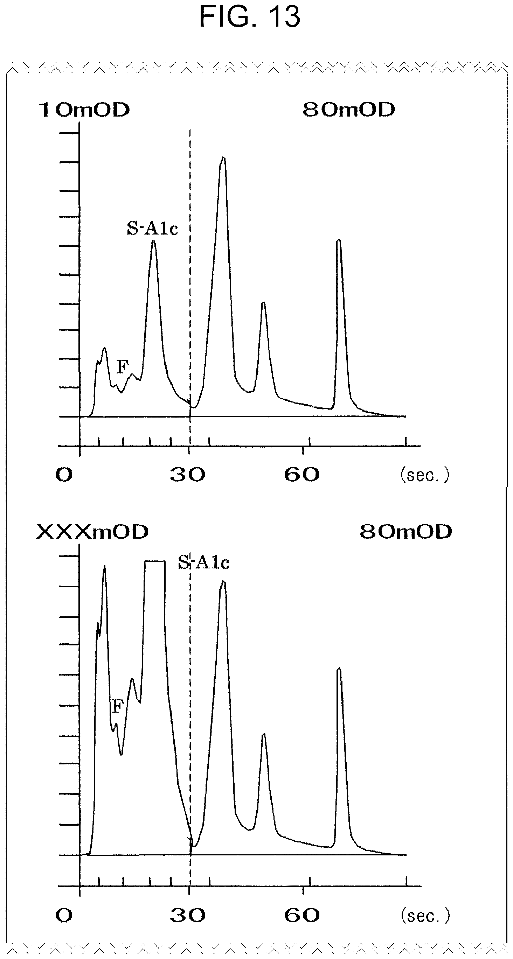

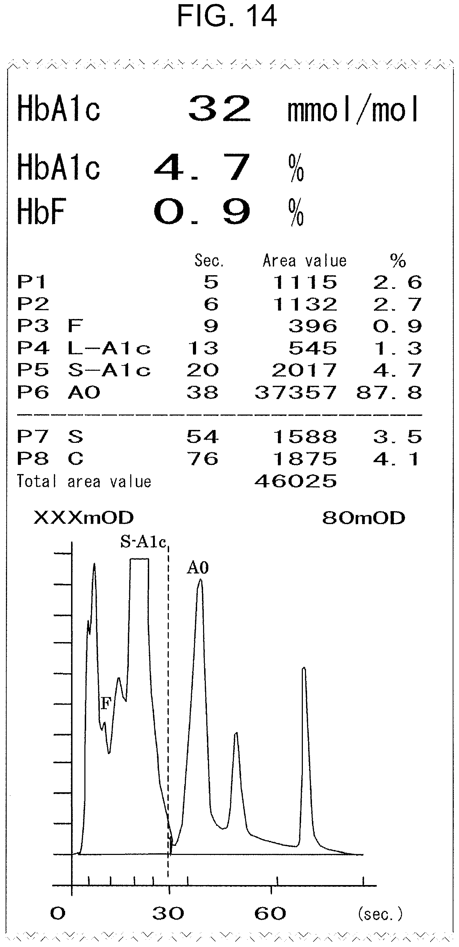

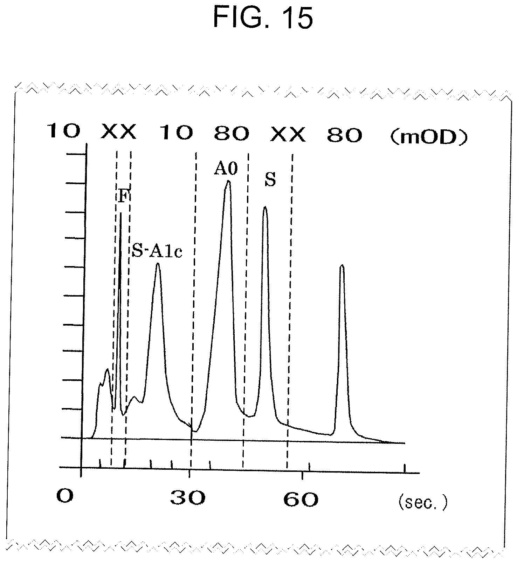

The processor 11, when accepting the parallel printing instruction, generates data that makes the printer 15 print the printed result as illustrated in FIG. 13 and then feed the generated data to the printer 15. Further, the processor 11, when accepting the single printing instruction, generates data that makes the printer 15 print the printed result as illustrated in FIG. 14 or FIG. 15 and then feed the generated data to the printer 15.
The processor 11, when accepting the priority level re-change instruction, re-displays on the touch screen 16 the priority level setting screen in which the current priority levels are shown, and then enters a state for waiting for the operator to re-change the priority levels.

Moreover, the processor 11, when accepting the priority level reflecting instruction, displays on the touch screen 16 a screen where each already-set display gain switching position (each display gain switching position designated by each current display gain switching position information) is shown and which is for accepting adding instruction of a display gain switchingposition, deleting instruction of a display gain switching position, etc. Then, the processor 11, when being instructed to add a display gain switching position, stores (adds) the adding instruction display gain switching position information designating the display gain switching position in the EEPROM 17. The processor 11, when being instructed to delete a display gain switching position, deletes the display gain switching position information corresponding to the display gain switching position in the EEPROM 17.

The processor 11 repeats such processing until a predetermined change completion instruction operation is performed by the operator. When the change completion instruction operation is performed, the processor 11 judges whether one or more display gain switching positions are added/deleted actually. If one or more display gain switching positions are added/deleted actually, the processor 11 executes a priority level initialization process (which will be described in depth later on), and then re-starts the measurement result displaying process of the above-mentioned contents.

In short, when the number of the peculiar display gain regions, etc. is changed (when one or more display gain switching positions are actually added/deleted), the processor 11 re-displays the measurement result screen by re-determining the display gain of each peculiar display gain region. However, in the case where the number of peculiar display gain regions are changed without changing the current priority levels, it is possible to arise the situation that "both of the current priority levels of two components whose peaks appears in the same peculiar display gain region are "1" ' (in other words, the situation where the component with the highest priority level cannot be specified)."

The priority level initialization process is the process for preventing such situations from arising. The processor 11 having started the priority level initialization process, at first, specifies "n+1" peculiar display gain regions by treating each of n pieces of the current display gain switching position information in the RAM 13 as information that defines the boundary position of two peculiar display gain regions . Namely, the processor 11 specifies "n+1" peculiar display gain regions newly set by the operator.

Next, processor 11 specifies, for each of the specified peculiar display gain regions, the default priority level for each components in the peculiar display gain region. Here, the default priority level is defined as a unique number (information in the second program in this embodiment) allocated to each component, the existence of which may be detected by detector 9.

Thereafter, the processor 11 converts the specified default priority levels into consecutive numbers that starts from "1" on a per peculiar display gain region basis. Next, processor 11 performs a process of rewriting the priority levels of each peculiar display gain region in the EEPROM 17 to corresponding converted results of the default priority levels and rewriting the current priority levels of each peculiar display gain region in the RAM 12 to corresponding converted results of the default priority levels. Then, the processor 11 terminates the priority level initialization process and stars (re-starts) the measurement result displaying process.

On the other hand, if one or more display gain switching positions are not added/deleted actually, the processor 11, based on the various information (display gains, current priority levels, etc) in the RAM 12, re-displays on the touch screen 16 the same screen with the one that had been displayed before accepting the priority level reflecting instruction. Then, the processor 11 again enters the state to accept the priority level re-change instruction, the priority level reflecting instruction, etc.

As discussed so far, the second HPLC apparatus 1 (the HPLC apparatus 1 according to the second embodiment) is configured so that the operator can set (change) the number of peculiar display gain regions and the range (width) of each peculiar display gain region and the operator can set (change) the priority level of eachmeasurement target component on a per peculiar display gain region basis. Consequently, it can be said that this second HPLC apparatus 1 is the apparatus capable of displaying the chromatogram in the form suitable for the analysis purpose in total independence of species of measurement target sample.

### <MODIFIED EXAMPLE OF EMBODIMENTS 1 AND 2>

Various modifications are possible for the second HPLC apparatus 1 described above. For example, the second HPLC apparatus 1 can be modified into an device to which a plurality of information sets each including the display gain switching position information and the priority levels can be set (registered) . Moreover, the second HPLC apparatus 1 can be modified into an device, only the priority levels in which can be set (changed) . In other words, the second HPLC apparatus 1 can be modified into an device, the peculiar display gain regions can be changed.

The HPLC apparatus 1 according to each embodiment is the apparatus that displays the chromatogram where a peak of a component having higher priority level is displayed more preferentially (the chromatogram where a peak of a measurement target component having highest priority level indicates the composition ratio of the measurement target component) . However, a chromatogram where raw data (time, area, area rate) of each measurement target component having higher priority level are displayed functions as the chromatogram where a peak of a component having higher priority level is displayed more preferentially. A chromatogram where a symbol (display level itself, etc.) indicating that it is important component is displayed near the peak of each measurement target component having higher priority level also functions as the chromatogram where a peak of a component having higher priority level is displayed more preferentially. Moreover, a chromatogram where the peak of each measurement target component having higher priority level is displayed in the color (or shade on the gray scale) corresponding to the composition ratio of the measurement target component functions as the chromatogram where a peak of a component having higher priority level is displayedmorepreferentially. Further, a chromatogram where the peak of each measurement target component is displayed in a color (or shade on the gray scale) corresponding to its priority level functions as the chromatogram where a peak of a component having higher priority level is displayed more preferentially.

Consequently, the HPLC apparatus 1 according to each embodiment can be modified into apparatuses that display such chromatograms.

### <OTHERS>

The present invention is not limited to only the illustrated examples given above but can be, as a matter of course, changed in a variety of forms within the scope that does not deviate from the claims of the present invention. Moreover, the above-mentioned embodiments serves as not only the embodiments relating to the device for displaying chromatogram according to the present invention but also the embodiments of the program and the recording medium according to the present invention.

## Claims

1. A method for displaying a chromatogram, wherein the chromatogram comprises a time axis and an axis corresponding to the detection output, wherein a plurality of measurement target components appear as a plurality of peaks in the chromatogram, the method comprising:
a step of determining a display form of the chromatogram, including reading priority information indicating priority levels of the measurement target components and determining a highest priority measurement target component having the highest priority level, and determining the display form based on the priority levels of the measurement target components; and
a step of displaying the chromatogram in the determined display form,
**characterized in that** the step of determining the display form includes:
determining a peak area of the highest priority measurement target component;
determining a sum of peak areas, wherein the sum of peak areas is either a sum of the peak areas of *all* measurement target components or a sum of peak areas of *specific* measurement target components;
determining a component ratio, wherein the component ratio is the ratio of the peak area of the highest priority measurement target component to the sum of peak areas; and
determining the display gain so that a ratio of the height of the peak of the highest priority measurement target component to the length of the output axis of the chromatogram is equal to the component ratio, whereby the height of the peak of the highest priority measurement target component corresponds to the component ratio, whereby the peak of the highest priority measurement target component is displayed more preferentially.

2. The method according to claim 1, wherein the chromatogram is displayed as a combination of a plurality of regions, wherein a region is obtained by dividing the chromatogram by one or more lines perpendicular to the time axis, the plurality of regions including a certain region in which the peaks of the measurement target components, including the peak of the highest priority measurement target component, are to be displayed,
wherein in the step of determining the display gain, the display gain of the certain region is determined based on the priority levels of the measurement target components whose peaks are to be displayed in the certain region, so that the peak of the measurement target component with higher priority level among said measurement target components whose peaks are to be displayed in the certain region is displayed more preferentially; and
wherein in the step of displaying the chromatogram, the certain region is displayed in the determined display gain and other regions of the plurality of regions of the chromatogram are displayed, concurrently.

3. The method according to claim 1, wherein the peaks of the measurement target components are to be displayed in a region of a chromatogram;
wherein the step of determining the display gain of the chromatogram comprises determining, based on the priority levels of the measurement target components whose peaks are to be displayed in the region of the chromatogram, the display gain of the region, so that the peak of the measurement target component having higher priority level among said measurement target components whose peaks are to be displayed in a region of the chromatogram is displayed more preferentially; and
wherein the step of displaying the chromatogram in the determined display gain comprises displaying the chromatogram including the region in the determined display gain.

4. The method according to claim 1, wherein the chromatogram is displayed as a combination of a HbA1c region where HbA1c elutes and a HbA0 region where HbA0 and one or more variant Hb's elute;
wherein, based on priority levels of HbA0 and one or more variant Hb's, a display gain of the HbA0 region is determined in the determining step so that a peak of a component with higher priority level among HbA0 and one or more variant Hb's whose peaks are to be displayed in the HbA0 region is displayed more preferentially; and
wherein in the step of displaying the chromatogram, the HbA0 region is displayed in the determined display gain and the HbA1c region is displayed, concurrently.

5. The method for displaying a chromatogram according to claim 4, wherein the step of determining determines the display gain so that a peak height of a highest priority component among HbA0 and one or more variant Hb's whose peaks are to be displayed in the HbA0 region indicates a component ratio of the component to all hemoglobins or specific hemoglobins.

6. An apparatus for displaying a chromatogram, wherein the chromatogram comprises a time axis and an axis corresponding to the detection output, wherein a plurality of measurement target components appear as a plurality of peaks in the chromatogram, the apparatus comprising:
a unit (11) to determine a display form of the chromatogram, wherein the unit is configured to: read priority information indicating priority levels of the measurement target components; determine a highest priority measurement target component having the highest priority level; and determine the display form based on the priority levels of the measurement target components; and
a unit (11) to display the chromatogram in the determined display form,
**characterized in that** the unit (11) to determine the display form is configured to:
determine a peak area of the highest priority measurement target component;
determine a sum of peak areas, wherein the sum of peak areas is either a sum of the peak areas of *all* measurement target components or a sum of peak areas of *specific* measurement target components;
determine a component ratio, wherein the component ratio is the ratio of the peak area of the highest priority measurement target component to the sum of peak areas; and
determine the display gain so that a ratio of the height of the peak of the highest priority measurement target component to the length of the output axis of the chromatogram is equal to the component ratio, whereby the height of the peak of the highest priority measurement target component corresponds to the component ratio, whereby the peak of the highest priority measurement target component is displayed more preferentially.

7. The apparatus according to claim 6, wherein the chromatogram is displayed as a combination of a plurality of regions wherein a region is obtained by dividing the chromatogram by one or more lines perpendicular to the time axis, the plurality of regions including a certain region in which the peaks of the measurement target components, including the peak of the highest priority measurement target component, are to be displayed,
wherein the unit (11) to determine the display gain determines the display gain of the certain region in which peaks of measurement target components are to be displayed, based on the priority levels of the measurement target components whose peaks are to be displayed in the certain region, so that the peak of the measurement target component with higher priority level among said measurement target components whose peaks are to be displayed in the certain region is displayed more preferentially,
and wherein the unit (11) to display the chromatogram is configured to display the certain region in the determined display gain and other regions of the plurality of regions of the chromatogram, concurrently.

8. The apparatus according to claim 6 or 7, wherein the apparatus is configured to display the chromatogram as a combination of a HbA1c region where HbA1c elutes and a HbA0 region where HbA0 and one or more variant Hb's elute;
wherein the unit (11) to determine the display gain is configured to determine, based on priority levels of HbA0 and one or more variant Hb's, a display gain of the HbA0 region so that a peak of a component with higher priority level among HbA0 and one or more variant Hb's whose peaks are to be displayed in the HbA0 region is displayed more preferentially; and
wherein the unit (11) to display the chromatogram is configured to display the HbA0 region in the determined display gain and the HbA1c region, concurrently.

9. The apparatus for displaying a chromatogram according to claim 8, wherein the unit (11) to determine the display gain determines the display gain so that a peak height of a highest priority component among HbA0 and one or more variant Hb's whose peaks are to be displayed in the HbA0 region indicates a component ratio of the component to all hemoglobins or specific hemoglobins.

10. A program to make a computer execute a method for displaying a chromatogram as claimed in claims 1 to 5.

11. A computer-readable recording medium stored with a program according to claim 10.

## Patentansprüche

1. Verfahren zur Anzeige eines Chromatogramms, wobei das Chromatogramm eine Zeitachse und eine Achse umfasst, die dem Detektionsausgang entspricht, wobei eine Vielzahl von Ziel-Messkomponenten als eine Vielzahl von Spitzen in dem Chromatogramm aufscheint, wobei das Verfahren umfasst:
einen Schritt zum Bestimmen einer Anzeigeform des Chromatogramms, der Lesen von Prioritätsinformationen, die Prioritätsebenen der Ziel-Messkomponenten angeben, und Bestimmen einer Ziel-Messkomponente mit höchster Priorität, die die höchste Prioritätsebene aufweist, und Bestimmen der Anzeigeform basierend auf den Prioritätsebenen der Ziel-Messkomponenten einschließt; und
einen Schritt zum Anzeigen des Chromatogramms in der bestimmten Anzeigeform,
**dadurch gekennzeichnet, dass** der Schritt zum Bestimmen der Anzeigeform Folgendes einschließt:
Bestimmen eines Spitzenbereichs der Ziel-Messkomponente mit höchster Priorität;
Bestimmen einer Summe von Spitzenbereichen, wobei die Summe von Spitzenbereichen entweder eine Summe der Spitzenbereiche von *allen* Ziel-Messkomponenten oder eine Summe von Spitzenbereichen von *spezifischen* Ziel-Messkomponenten ist;
Bestimmen eines Komponentenverhältnisses, wobei das Komponentenverhältnis das Verhältnis des Spitzenbereichs der Ziel-Messkomponente mit höchster Priorität zur Summe von Spitzenbereichen ist; und
Bestimmen der Anzeigeverstärkung, sodass ein Verhältnis der Höhe der Spitze der Ziel-Messkomponente mit höchster Priorität zu der Länge der Ausgangsachse des Chromatogramms gleich dem Komponentenverhältnis ist, wobei die Höhe der Spitze der Ziel-Messkomponente mit höchster Priorität dem Komponentenverhältnis entspricht, wobei die Spitze der Ziel-Messkomponente mit höchster Priorität bevorzugter angezeigt wird.

2. Verfahren nach Anspruch 1, wobei das Chromatogramm als Kombination einer Vielzahl von Regionen angezeigt wird, wobei eine Region durch Teilen des Chromatogramms durch eine oder mehrere Zeilen senkrecht zu der Zeitachse erhalten wird, wobei die Vielzahl von Regionen eine bestimmte Region einschließt, in der die Spitzen der Ziel-Messkomponenten, die die Spitze der Ziel-Messkomponente mit höchster Priorität einschließen, anzuzeigen sind,
wobei in dem Schritt zum Bestimmen der Anzeigeverstärkung die Anzeigeverstärkung der bestimmten Region basierend auf den Prioritätsebenen der Ziel-Messkomponenten bestimmt wird, deren Spitzen in der bestimmten Region anzuzeigen sind, sodass die Spitze der Ziel-Messkomponente mit höherer Prioritätsebene unter den Ziel-Messkomponenten, deren Spitzen in der bestimmten Region anzuzeigen sind, bevorzugter angezeigt wird; und
wobei in dem Schritt des Anzeigens des Chromatogramms die bestimmte Region in der bestimmten Anzeigeverstärkung angezeigt wird und andere Regionen der Vielzahl von Regionen des Chromatogramms gleichzeitig angezeigt werden.

3. Verfahren nach Anspruch 1, wobei die Spitzen der Ziel-Messkomponenten in einer Region eines Chromatogramms anzuzeigen sind;
wobei der Schritt zum Bestimmen der Anzeigeverstärkung des Chromatogramms Bestimmen, basierend auf den Prioritätsebenen der Ziel-Messkomponenten, deren Spitzen in der Region des Chromatogramms anzuzeigen sind, die Anzeigeverstärkung der Region umfasst, sodass die Spitze der Ziel-Messkomponente, die eine höhere Prioritätsebene unter den Ziel-Messkomponenten aufweist, deren Spitzen in einer Region des Chromatogramms anzuzeigen sind, bevorzugter angezeigt wird; und
wobei der Schritt zum Anzeigen des Chromatogramms in der bestimmten Anzeigeverstärkung Anzeigen des Chromatogramms umfasst, das die Region in der bestimmten Anzeigeverstärkung einschließt.

4. Verfahren nach Anspruch 1, wobei das Chromatogramm als Kombination einer HbAlc Region, in der HbAlc eluiert, und einer HbA0 Region, in der HbA0 und eine oder mehr unterschiedliche Hb's eluieren, angezeigt wird;
wobei, basierend auf Prioritätsebenen von HbA0 und einer oder mehr unterschiedlicher Hb's eine Anzeigeverstärkung der HbA0 Region in dem Bestimmungsschritt bestimmt werden, sodass eine Spitze einer Komponente mit einer höheren Prioritätsebene unter HbA0 und einer oder mehr unterschiedlicher Hb's deren Spitzen in der HbA0 Region anzuzeigen sind, bevorzugter angezeigt wird; und
wobei in dem Schritt zum Anzeigen des Chromatogramms die HbA0 Region in der bestimmten Anzeigeverstärkung angezeigt wird und die HbAlc Region gleichzeitig angezeigt wird.

5. Verfahren zum Anzeigen eines Chromatogramms nach Anspruch 4, wobei der Schritt zum Bestimmen die Anzeigeverstärkung bestimmt, sodass eine Spitzenhöhe einer Komponente mit höchster Priorität unter HbA0 und einer oder mehr unterschiedlicher Hb's, deren Spitzen in der HbA0 Region anzuzeigen sind, ein Komponentenverhältnis der Komponente zu allen Hämoglobinen oder spezifischen Hämoglobinen angibt.

6. Einrichtung zum Anzeigen eines Chromatogramms, wobei das Chromatogramm eine Zeitachse und eine Achse umfasst, die dem Detektionsausgang entspricht, wobei eine Vielzahl von Ziel-Messkomponenten als eine Vielzahl von Spitzen in dem Chromatogramm aufscheint, wobei die Einrichtung Folgendes umfasst:
eine Einheit (11) zum Bestimmen einer Anzeigeform des Chromatogramms, wobei die Einheit konfiguriert ist zum: Lesen von Prioritätsinformationen, die Prioritätsebenen der Ziel-Messkomponenten angeben; Bestimmen einer Ziel-Messkomponente mit höchster Priorität, die die höchste Prioritätsebene aufweist; und Bestimmen der Anzeigeform basierend auf den Prioritätsebenen der Ziel-Messkomponenten; und
eine Einheit (11) zum Anzeigen des Chromatogramms in der bestimmten Anzeigeform,
**dadurch gekennzeichnet, dass** die Einheit (11) zum Bestimmen der Anzeigeform konfiguriert ist zum:
Bestimmen eines Spitzenbereichs der Ziel-Messkomponente mit höchster Priorität;
Bestimmen einer Summe von Spitzenbereichen, wobei die Summe von Spitzenbereichen entweder eine Summe der Spitzenbereiche von *allen* Ziel-Messkomponenten oder eine Summe von Spitzenbereichen von *spezifischen* Ziel-Messkomponenten ist;
Bestimmen eines Komponentenverhältnisses, wobei das Komponentenverhältnis das Verhältnis des Spitzenbereichs der Ziel-Messkomponente mit höchster Priorität zur Summe von Spitzenbereichen ist; und
Bestimmen der Anzeigeverstärkung, sodass ein Verhältnis der Höhe der Spitze der Ziel-Messkomponente mit höchster Priorität zu der Länge der Ausgangsachse des Chromatogramms gleich dem Komponentenverhältnis ist, wobei die Höhe der Spitze der Ziel-Messkomponente mit höchster Priorität dem Komponentenverhältnis entspricht, wobei die Spitze der Ziel-Messkomponente mit höchster Priorität bevorzugter angezeigt wird.

7. Einrichtung nach Anspruch 6, wobei das Chromatogramm als Kombination einer Vielzahl von Regionen angezeigt wird, wobei eine Region durch Teilen des Chromatogramms durch eine oder mehrere Zeilen senkrecht zu der Zeitachse erhalten wird, wobei die Vielzahl von Regionen eine bestimmte Region einschließt, in der die Spitzen der Ziel-Messkomponenten, die die Spitze der Ziel-Messkomponente mit höchster Priorität einschließen, anzuzeigen sind,
wobei die Einheit (11) zum Bestimmen der Anzeigeverstärkung die Anzeigeverstärkung der bestimmten Region, in der Spitzen von Ziel-Messkomponenten anzuzeigen sind, basierend auf den Prioritätsebenen der Ziel-Messkomponenten bestimmt, deren Spitzen in der bestimmten Region anzuzeigen sind, sodass die Spitze der Ziel-Messkomponente mit höherer Prioritätsebene unter den Ziel-Messkomponenten, deren Spitzen in der bestimmten Region anzuzeigen sind, bevorzugter angezeigt wird,
und wobei die Einheit (11) zum Anzeigen des Chromatogramms konfiguriert ist, um die bestimmte Region in der bestimmten Anzeigeverstärkung und andere Regionen der Vielzahl von Regionen des Chromatogramms gleichzeitig anzuzeigen.

8. Einrichtung nach Anspruch 6 oder 7, wobei die Einrichtung konfiguriert ist, um das Chromatogramm als Kombination einer HbAlc Region, in der HbAlc eluiert, und einer HbA0 Region, in der HbA0 und eine oder mehr unterschiedliche Hb's eluieren, anzuzeigen;
wobei die Einheit (11) zum Bestimmen der Anzeigeverstärkung konfiguriert ist, um basierend auf Prioritätsebenen von HbA0 und einer oder mehr unterschiedlicher Hb's eine Anzeigeverstärkung der HbA0 Region zu bestimmen, sodass eine Spitze einer Komponente mit einer höheren Prioritätsebene unter HbA0 und einer oder mehr unterschiedlicher Hb's deren Spitzen in der HbA0 Region anzuzeigen sind, bevorzugter angezeigt wird; und
wobei die Einheit (11) zum Anzeigen des Chromatogramms konfiguriert ist, um die HbA0 Region in der bestimmten Anzeigeverstärkung und die HbAlc Region gleichzeitig anzuzeigen.

9. Einrichtung zum Anzeigen eines Chromatogramms nach Anspruch 8, wobei die Einheit (11) zum Bestimmen der Anzeigeverstärkung die Anzeigeverstärkung bestimmt, sodass eine Spitzenhöhe einer Komponente mit höchster Priorität unter HbA0 und einer oder mehr unterschiedlicher Hb's, deren Spitzen in der HbA0 Region anzuzeigen sind, ein Komponentenverhältnis der Komponente zu allen Hämoglobinen oder spezifischen Hämoglobinen angibt.

10. Programm, um einen Computer zu veranlassen, ein Verfahren zum Anzeigen eines Chromatogramms nach einem der Ansprüche 1 bis 5 auszuführen.

11. Computerlesbares Speichermedium, auf dem ein Programm nach Anspruch 10 gespeichert ist.

## Revendications

1. Procédé pour afficher un chromatogramme, dans lequel le chromatogramme comprend un axe des temps et un axe correspondant au signal de détection, dans lequel une pluralité de composants de cible de mesure apparaît sous la forme d'une pluralité de pics dans le chromatogramme, le procédé comprenant :
une étape consistant à déterminer une forme d'affichage du chromatogramme, comprenant la lecture d'informations de priorité indiquant des niveaux de priorité des composants de cible de mesure et la détermination d'un composant de cible de mesure à la priorité la plus élevée ayant le niveau de priorité le plus élevé et la détermination de la forme d'affichage sur la base des niveaux de priorité des composants de cible de mesure ; et
une étape consistant à afficher le chromatogramme dans la forme d'affichage déterminée,
**caractérisé en ce que** l'étape consistant à déterminer la forme d'affichage comprend :
la détermination d'une surface de pic du composant de cible de mesure à la priorité la plus élevée ;
la détermination d'une somme de surfaces de pic, dans lequel la somme de surfaces de pic est soit une somme des surfaces de pic de *tous* les composants de cible de mesure, soit une somme de surfaces de pic de composants de cible de mesure *spécifiques*;
la détermination d'un rapport de composant, dans lequel le rapport de composant est le rapport de la surface de pic du composant de cible de mesure à la priorité la plus élevée à la somme des surfaces de pic ; et
la détermination du gain d'affichage de telle sorte qu'un rapport de la hauteur du pic du composant de cible de mesure à la priorité la plus élevée à la longueur de l'axe de sortie du chromatogramme est égal au rapport de composant, sachant que la hauteur du pic du composant de cible de mesure à la priorité la plus élevée correspond au rapport de composant, sachant que le pic du composant de cible de mesure à la priorité la plus élevée est affiché de manière plus préférentielle.

2. Procédé selon la revendication 1, dans lequel le chromatogramme est affiché sous la forme d'une combinaison d'une pluralité de régions, dans lequel une région est obtenue en divisant le chromatogramme par une ou plusieurs lignes perpendiculaires à l'axe des temps, la pluralité de régions comprenant une région donnée dans laquelle les pics des composants de cible de mesure, y compris le pic du composant de cible de mesure à la priorité la plus élevée, doivent être affichés,
dans lequel, dans l'étape consistant à déterminer le gain d'affichage, le gain d'affichage de la région donnée est déterminé sur la base des niveaux de priorité des composants de cible de mesure dont les pics doivent être affichés dans la région donnée, de telle sorte que le pic du composant de cible de mesure ayant le niveau de priorité supérieur parmi lesdits composants de cible de mesure dont les pics doivent être affichés dans la région donnée, est affiché de manière plus préférentielle ; et
dans lequel dans l'étape consistant à afficher le chromatogramme, la région donnée est affichée dans le gain d'affichage déterminé et les autres régions de la pluralité de régions du chromatogramme sont affichées simultanément.

3. Procédé selon la revendication 1, dans lequel les pics des composants de cible de mesure doivent être affichés dans une région d'un chromatogramme ;
dans lequel l'étape consistant à déterminer le gain d'affichage du chromatogramme comprend la détermination, sur la base des niveaux de priorité des composants de cible de mesure dont les pics doivent être affichés dans la région du chromatogramme, du gain d'affichage de la région de telle sorte que le pic du composant de cible de mesure ayant le niveau de priorité supérieur parmi lesdits composants de cible de mesure dont les pics doivent être affichés dans une région du chromatogramme, est affiché de manière plus préférentielle ; et
dans lequel l'étape consistant à afficher le chromatogramme dans le gain d'affichage déterminé comprend l'affichage du chromatogramme y compris la région dans le gain d'affichage déterminé.

4. Procédé selon la revendication 1, dans lequel le chromatogramme est affiché sous la forme d'une combinaison d'une région d'HbAlc dans laquelle HbAlc est éluée, et d'une région d'HbAO dans laquelle HbA0 et une ou plusieurs variantes d'Hb sont éluées ;
dans lequel, sur la base des niveaux de priorité d'HbAO et d'une ou plusieurs variantes d'Hb, un gain d'affichage de la région d'HbAO est déterminé dans l'étape de détermination de sorte qu'un pic d'un composant ayant le niveau de priorité supérieur parmi HbA0 et une ou plusieurs variantes d'Hb, dont les pics doivent être affichés dans la région d'HbAO, est affiché de manière plus préférentielle ; et
dans lequel, dans l'étape consistant à afficher le chromatogramme, la région d'HbAO est affichée dans le gain d'affichage déterminé et la région d'HbAlc est affichée simultanément.

5. Procédé pour afficher un chromatogramme selon la revendication 4, dans lequel l'étape de détermination détermine le gain d'affichage de telle sorte qu'une hauteur de pic d'un composant à la priorité la plus élevée parmi HbA0 et une ou plusieurs variantes d'Hb, dont les pics doivent être affichés dans la région d'HbAO, indique un rapport de composant du composant à toutes les hémoglobines ou à des hémoglobines spécifiques.

6. Appareil pour afficher un chromatogramme, dans lequel le chromatogramme comprend un axe des temps et un axe correspondant au signal de détection, dans lequel une pluralité de composants de cible de mesure apparaît sous la forme d'une pluralité de pics dans le chromatogramme, l'appareil comprenant :
une unité (11) destinée à déterminer une forme d'affichage du chromatogramme, dans lequel l'unité est configurée pour lire des informations de priorité indiquant des niveaux de priorité des composants de cible de mesure ; et pour déterminer un composant de cible de mesure à la priorité la plus élevée ayant le niveau de priorité le plus élevé ; et pour déterminer la forme d'affichage sur la base des niveaux de priorité des composants de cible de mesure ; et
une unité (11) destinée à afficher le chromatogramme dans la forme d'affichage déterminée,
**caractérisé en ce que** l'unité (11) destinée à déterminer la forme d'affichage est configurée :
pour déterminer une surface de pic du composant de cible de mesure à la priorité la plus élevée ;
pour déterminer une somme de surfaces de pic, dans laquelle la somme de surfaces de pic est soit une somme des surfaces de pic de *tous* les composants de cible de mesure, soit une somme de surfaces de pic de composants de cible de mesure *spécifiques*;
pour déterminer un rapport de composant, dans lequel le rapport de composant est le rapport de la surface de pic du composant de cible de mesure à la priorité la plus élevée à la somme des aires de pic ; et
pour déterminer le gain d'affichage de telle sorte qu'un rapport de la hauteur du pic du composant de cible de mesure à la priorité la plus élevée à la longueur de l'axe de sortie du chromatogramme est égal au rapport de composant, sachant que la hauteur du pic du composant de cible de mesure à la priorité la plus élevée correspond au rapport de composant, sachant que le pic du composant de cible de mesure à la priorité la plus élevée est affiché de manière plus préférentielle.

7. Appareil selon la revendication 6, dans lequel le chromatogramme est affiché sous la forme d'une combinaison d'une pluralité de régions, dans lequel une région est obtenue en divisant le chromatogramme par une ou plusieurs lignes perpendiculaires à l'axe des temps, la pluralité de régions comprenant une région donnée dans laquelle les pics des composant de cible de mesure, y compris le pic du composant de cible de mesure à la priorité la plus élevée, doivent être affichés,
dans lequel l'unité (11) destinée à déterminer le gain d'affichage détermine le gain d'affichage de la région donnée dans lequel des pics de composants de cible de mesure doivent être affichés, sur la base des niveaux de priorité des composants de cible de mesure dont les pics doivent être affichés dans la région donnée, de sorte que le pic du composant de cible de mesure ayant le niveau de priorité supérieur parmi lesdits composants de cible de mesure dont les pics doivent être affichés dans la région donnée, soit affiché de manière plus préférentielle ; et
dans lequel l'unité (11) destinée à afficher le chromatogramme est configurée pour afficher la région donnée dans le gain d'affichage déterminé et d'autres régions de la pluralité de régions du chromatogramme, simultanément.

8. Appareil selon la revendication 6 ou 7, dans lequel l'appareil est configuré pour afficher le chromatogramme sous la forme d'une combinaison d'une région d'HbAlc dans laquelle HbAlc est éluée, et d'une région d'HbAO dans laquelle HbA0 et une ou plusieurs variantes d'Hb sont éluées ;
dans lequel l'unité (11) destinée à déterminer le gain d'affichage est configurée pour déterminer, sur la base des niveaux de priorité d'HbAO et d'une ou plusieurs variantes d'Hb, un gain d'affichage de la région d'HbAO de sorte qu'un pic d'un composant ayant le niveau de priorité supérieur parmi HbA0 et une ou plusieurs variantes d'Hb, dont les pics doivent être affichés dans la région d'HbAO, est affiché de manière plus préférentielle ; et
dans lequel l'unité (11) destinée à afficher le chromatogramme est configurée pour afficher la région d'HbAO dans le gain d'affichage déterminé et la région d'HbAlc, simultanément.

9. Appareil pour afficher un chromatogramme selon la revendication 8, dans lequel l'unité (11) destinée à déterminer le gain d'affichage détermine le gain d'affichage de sorte qu'une hauteur de pic d'un composant à la priorité la plus élevée parmi HbA0 et une ou plusieurs variantes d'Hb, dont les pics doivent être affichés dans la région d'HbAO, indique un rapport de composant du composant à toutes les hémoglobines ou à des hémoglobines spécifiques.

10. Programme permettant à un ordinateur d'exécuter un procédé d'affichage d'un chromatogramme tel que revendiqué dans les revendications 1 à 5.

11. Support d'enregistrement lisible par ordinateur stocké avec un programme selon la revendication 10.
